Europäisches Patentamt

European Patent Office

Office européen des brevets

(11) Publication number: **0 118 609**
**A1**

(12) # EUROPEAN PATENT APPLICATION

(21) Application number: **83112185.0**

(22) Date of filing: **03.12.83**

(51) Int. Cl.³: **H 01 M 2/12**

(30) Priority: **21.12.82 US 451876**

(43) Date of publication of application:
**19.09.84 Bulletin 84/38**

(84) Designated Contracting States:
**BE CH DE FR GB LI**

(71) Applicant: **UNION CARBIDE CORPORATION**
**Old Ridgebury Road**
**Danbury Connecticut 06817(US)**

(72) Inventor: **Beatty, Theodore Robert**
**31568 Anna Lane**
**Bay Village Ohio 44140(US)**

(74) Representative: **Görtz; Dr. Fuchs; Dr. Harders**
**Patentanwälte**
**Sonnenberger Strasse 100 Postfach 26 26**
**D-6200 Wiesbaden(DE)**

(54) **Safety valve with a rupturable membrane for a galvanic cell.**

(57) Galvanic cells possessing at least one rupture diaphragm assembly which is comprised of a thin film membrane (24) secured over the pressure side of a venting aperture (22).

FIG. I

Croydon Printing Company Ltd.

EP 0 118 609 A1

TITLE MODIFIED
see front page

- 1 -

## RUPTURE DIAPHRAGM FOR GALVANIC CELL

### Field of the Invention

This invention relates to a galvanic cell comprised of a cupped container having therein an anode and a cathode separated from the anode by a separator, with electrolyte disposed therein.

### Background of the Invention

The chemical nature of many electrochemical systems employed for the production of electricity is such that gas, usually hydrogen, is generated during storage and sometimes during or following service use. When sealed cell containers are employed, as is the case in certain primary and secondary cells, the build-up of gas-pressure within the sealed container has proven dangerous.

In the past, a dangerous build-up of pressure generally has been prevented by some sort of continuous venting means or by periodic release through valve systems. These means have included venting slits or apertures in gasket membranes or sealing gums which pass gas bubbles and then reform after release.

Alleviation of built-up gas pressures from alkaline cells has been found to be particularly difficult. Alkaline electrolytes are not easy to contain within a sealed container and they will creep along almost any sealing surface and contaminate the outside of the cell package. Accordingly, it has been the practice in order to prevent creepage and loss of electrolyte to seal the cell container very tightly. Unfortunately, higher and more dangerous pressure build-ups are a direct result of tightly sealed cells.

Most venting systems which have been devised will satisfactorily relieve high gas pressures but unfortunately will, in addition, permit electrolyte leakage. For example, release valves which are intended to reseal after activation under pressure are too easily fouled by caustic electrolyte salts. These salts are formed when caustic electrolyte, which has crept along the sealing surface of the valve, combines with the carbon dioxide in the air to form a carbonate. The carbonate salt cakes the valve surface and prevents proper resealing of the valve, with the result that more electrolyte will then leak through the partially opened valve.

A second approach that has been employed is the use of blow out membranes. These membranes have been of two basic types: puncture mechanisms and rupture mechanisms. Puncture mechanisms employ a spiked member which, when sufficient internal pressure develops, is pushed by such pressure so that the spikes punch holes in a thin membrane located near said spiked member. However, a problem with this mechanism is that the holes tend to be plugged by the spikes as well as with zinc gel. Rupture mechanisms, as exemplified in US-A 3,218,197, employ a molded seal wherein a small portion of such seal is comprised of a thin membrane. This membrane ruptures when the interior pressure of the cell becomes too great. However, because of limitations of the molding process, there are restrictions on how thin such membranes may be molded as well as difficulties in producing a uniform thickness of membrane such that the blow out pressure will be consistent for a number of cells.

Accordingly, the principal object of the invention is to provide a venting means which will rupture at predetermined safe pressure, thereby preventing rupture of the cell container due to abnormally high pressures.

## Summary of the Invention

In one aspect, the present invention relates to galvanic cells comprised of a cover and a cupped container having therein an anode and a cathode separated from the anode by a separator, with electrolyte disposed therein characterized in that said cell possesses at least one rupture diaphragm assembly comprised of a thin film membrane which is secured over the pressure side of a venting aperture which is defined in said cell cover or container such that when the internal pressure of the cell exceeds a predetermined limit said thin film membrane will rupture allowing the pressure to be relieved from the interior of the cell via said venting aperture.

In another aspect, this invention relates to galvanic cells comprised of a cover, a closure gasket and a cupped container having therein an anode and a cathode separated from the anode by a separator, with electrolyte disposed therein characterized in that said cell possesses at least one rupture diaphragm assembly comprised of a thin film membrane which is secured over the pressure side of a venting aperture which is defined in said closure gasket such that when the internal pressure of the cell exceeds a predetermined limit said thin film membrane will rupture allowing the pressure to be relieved from the interior of the cell via said venting aperture.

The rupture diaphragm assembly which is employed in cells of the instant invention comprises a venting aperture with a thin film secured thereover. The film is secured over the pressure side of the aperture, resulting in a construction in which pressure built up inside the cell will exert stress in a manner in which the shear, rather than the peel, strength of the bonding mechanism used to secure the film will be tested.

The venting aperture is typically a hole defined in the cover and/or container of the cell although it may be located in a closure gasket within the cell. When the venting aperture is defined by a gasket within the cell, at least one external venting means must be present in the outer jacket or cover of the cell. The venting aperture need not be circular but should be substantially burr-free on the surface to which the film is secured in order to insure a uniform rupture pressure. Preferably, a plurality of rupture diaphragm assemblies are present in the cell.

The thin film that is secured over the venting aperture should be made of a material which is nonporous, chemically inert to tne reactants in the cell, relatively strong, and which is capable of being secured mechanically or adhesively over the venting aperture. As will be apparent to one skilled in the art, when the construction of the cell is such that the film will come into contact with both the anode and the cathode the film must be nonconductive. Preferably, the film employed is hydrogen permeable. Illustrative of the materials of which the film may be composed are plastics such as vinyl, nylon, polyethylene and the like, as well as metallized plastic films or thin metal sheets such as aluminum, lead, etc.

Tne thin film is preferably secured aDout the venting aperture by the use of adhesives. Preferably, such adhesives are fast bonding and will exhibit chemical resistance to the active components of the cell coupled with long term stability. Because the adhesives generally employed as bonding means possess a much higner shear strength than peel strength, this construction will reduce the chance of adhesive failure, thus making the rupture strength of the film determinative of the pressure at which the cell will vent excess pressure. Illustrative of the adhesives which may be employed are polyamide hot melts, ultraviolet cured acrylics, epoxies, etc. As will be apparent to one skilled in the art, the preferred adhesive will vary depending upon the composition of the film, the composition of the surface to which the film is bonded, etc.

Alternatively the film could be adhesively secured by other bonding means such as ultrasonic techniques, heat sealing, etc. The adhesive may be applied in any conventional manner such as spraying, painting, etc. although in some combinations the use of an adhesive in the form of a discrete film is preferred.

When using adhesive bonding means it is not necessary that the thin film membrane extend across the entire surface of the cell cover, container wall and/or closure gasket to which it is adhered. "Patches" of such film may be employed so long as the venting aperture over which such patch is to be placed is adequately covered so that the film membrane rupture pressure will be determinative of when the rupture diaphragm assembly actually ruptures.

In the design of any particular rupture diaphragm, there are a number of variables which must be taken into account.

The blow-out or rupture function of the film is dependent upon the physical properties of the film material, such as tensile strength and elongation, and also the dimensions of the film, i.e., the area and thickness of the film surface under stress. For any given material, the rupture pressure increases with increased thickness of the film and, conversely, decreases with increased film area.

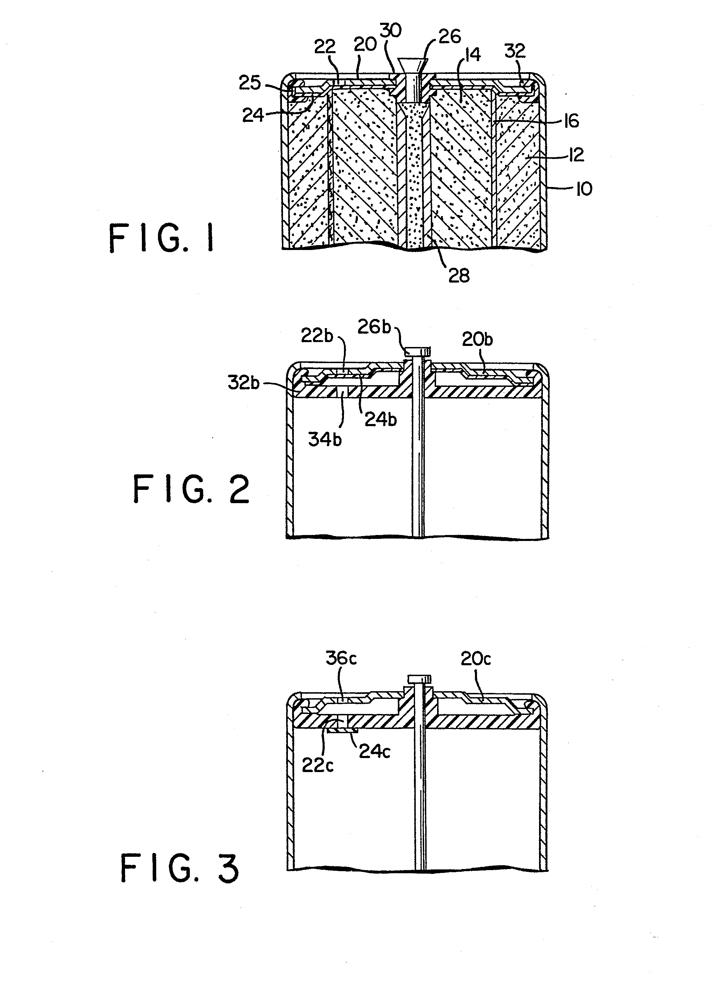

Table I, below, indicates the rupture pressure for films of various composition and thickness adhesively secured about venting apertures of various sizes. These pressures were determined by pressurizing empty cell containers having the rupture diaphragm assembly design of Figure 3 until the film in such assembly ruptured.

**Table I**

| mm Aperture Diameter (inch) | (0.004)0,10 inch)mm Lead | (0.006 0,15 inch)mm Vinyl | (0.004 0,10 inch)mm Vinyl | (0.002 0,15 inch)mm Al |
|---|---|---|---|---|
| 6,35 (0.250) | (200) 13,8 | | | |
| 5,33 (0.210) | (230) 15,8 | | | (350)24,1 |
| 4,32 (0.170) | | (300)20,7 | (250) 17,2 | |
| 3,58 (0.141) | (330) 22,7 | (380)26,2 | | |
| 3,10 (0.122) | (400) 27,6 | | | |
| 2,54 (0.100) | (530) 36,6 | | | |
| 1,78 (0.070 | (870) 59,9 | | | |

*Rupture Pressure In(psi) bar*

In some embodiments of the rupture diaphragm of this invention it is desirable to employ a film which is hydrogen permeable in order to permit hydrogen diffusion from the interior of the cell. Tne rate of hydrogen diffusion through the membrane is dependent upon the membrane material employed, the membrane area and its thickness, and the pressure differential across the membrane.

Table II indicates the hydrogen gas permeability characteristics of some of the various plastic materials from which the film of the rupture diaphragm may suitably be made. In addition, Table II shows the calculated hydrogen gas diffusion rate for each material when employed in a "D" size alkaline cell; size "D" being as defined in Circular 466 of the National Bureau of Standards of the United States Department of Commerce. Cell calculations were based upon the area and thickness shown in the Table and upon a hydrogen pressure differential across the membrane of 6 atmospheres.

## Table II

### Calculated Hydrogen Gas Venting

| Material | Membrane area (sq. inches) cm$^2$ | Membrane thickness (inches) mm | Calculated hydrogen gas venting, cc./week |
|---|---|---|---|
| Nylon | (0.031) 0,20 | (0.003) 0,0076 | 0.7 |
| Vinyl | (0.031) 0,20 | (0.003) " | 7.33 |
| Polyethylene | (0.031) 0,20 | (0.003) " | 5.92 |

One skilled in the art will be able by means of simple calculation and/or experimentation to determine the rupture pressures as well as the hydrogen gas diffusion rate for other materials or for the listed materials in Table II at different thicknesses or areas.

It is apparent from Table II that some materials will diffuse hydrogen at a much faster rate than others. Vinyl and polyethylene plastics, for example, will diffuse hydrogen gas approximately ten times faster than nylon. Thus the characteristics and properties of the particular galvanic cell in which the membrane is to be employed must be considered. For example, the active materials of some cells can be selected to minimize gassing. If very little gassing occurs in a specific cell, the membrane may be selected to allow little or no gas passage but to permit close control of the pressure required to rupture the membrane.

The invention will be more readily understood by reference to the accompanying drawing wherein:

FIGURE 1 is a partial sectional elevation of a raw D size alkaline manganese dioxide-zinc cell, which utilizes the rupture diaphragm assembly of the invention;

FIGURE 2 is an enlarged fragmentary view of an AA size cell with the internal components of the cell omitted exhibiting another embodyment of the invention; and

FIGURE 3 is an enlarged fragmentary view of an AA size cell with the internal components of the cell omitted exhibiting another embodiment of the invention.

Although the drawing depicts an alkaline manganese dioxide-zinc cell, the rupture diaphragm assembly of this invention may be employed in cells which employ other cathode/anode combinations such as nickel-cadmium and the like, etc.

Referring now to FIGURE 1, the raw cell comprises a cupped container 10 having a cathode 12 and an anode 14, separated by a separator 16 and having electrolyte disposed therein.

The cell is provided with a cover 20, typically made of metal or plastic, in which there is defined a venting aperture 22, although more than one aperture may be provided if desired. A thin film membrane 24, having a peripheral flange 25, is adhesively secured to the under surface of the cover 20 about the venting aperture 22. It should be noted that the film 24 also serves to seal the cell. A centrally located terminal rivet 26 is in contact with the anode current collector 28. A first gasket 30, which may be formed of a molded plastic such as nylon, is fitted around the terminal rivet 26 and is compressed between the terminal rivet 26 and the cover 20. A second gasket 32 is radially compressed between the cover 22 and the container 10, thereby resulting in an extremely leak resistant gas tight cell.

Alternatively, film 24 could be secured without the need for adhesive bonding by mechanically sealing the peripheral portion of film 24 within gasket 32 and mechanically securing the area defining the central opening of film 24 within gasket 30. As will be obvious to one skilled in the art the first gasket 30 could be longetudinally pinched by terminal rivet 26 to mechanically secure the inner portion of film 24 while the outer flange 25 of the film could be radially compressed to mechanically secure such flange thereat.

FIGURE 2 shows a first alternate embodiment of the invention wherein the cell contains a plastic closure gasket 32b. Such closure gasket 32b is fitted around the terminal rivet 26b and contains at least one aperture 34b. The venting aperture 22b is located in the cover 20b and the thin film membrane 24b is adhesively disposed on the under surface thereof about the venting aperture 22b.

FIGURE 3 shows a second alternate embodiment of the invention wherein the venting aperture 22c is defined by the closure gasket 32c. The thin film patch 24c is adhesively secured about such venting aperture 22c. The cover 20c contains at least one external venting means 36c.

In order to test the effectiveness of the rupture diaphragms of the instant invention a number of standard D size alkaline $MnO_2$ cells were prepared utilizing a vent design similar to that shown in Figure 3 except that a full film membrane was used rather than a patch.

Gasket were made of nylon 66 containing three circular venting apertures each of such

apertures having a diameter of (0.095 inch) 0,24 mm. A (0.002 inch) 0,005 mm thick film membrane of nylon 66 was adhesively bonded to the gasket with a layer of polyamide adhesive made by Sharnet, Inc. designated 2410. An impulse heat sealer which generated a temperature of (340°F) 171°C on the (0.002 inch) 0,005 mm thick film was used to make the adhesive bond.

Five cells were charged until rupture occurred. The data observed are listed in Table III.

TABLE III

| NUMBER OF CELLS | CHARGE (AMPS) | ESTIMATED RUPTURE PRESSURE (PSI) | TIME TO RUPTURE (MINUTES) | | |
|---|---|---|---|---|---|
| | | | AVG | MIN | MAX |
| 3 | 1 | 300 | 16 | 13 | 20 |
| 2 | 2 | 625 | 6 | 4.5 | 7.5 |

It is characteristic of this type of vent that the rupture pressure will be higher with a sudden application of pressure than as compared to a more gradual buildup of pressure wherein the film membrane has a change to gradually expand prior to rupture.

In order to test the effectiveness of the seal produced by the rupture diaphragm assembly during elevated temperature storage, 10 cells of the type described above were stored at 54°C. After twelve weeks, no cell leakage was observed. Another 10 cells were stored at 71°C. After seven weeks only one cell had leaked.

As is evident from this test the cells of the instant invention which contain the novel rupture diaphragm assembly may be stored at high temperature without excessive leakage, notwithstanding the adhesive bond contained therein.

The galvanic cells of this invention possess at least one rupture diaphragm assembly which is comprised of a thin film membrane secured over the pressure side of a venting aperture. By coordinating the size of the venting aperture, the composition of the film, and the thickness of the film, the diaphragm may be selected to rupture when the gas pressure inside the cell exceeds a preselected pressure.

CLAIMS:

1. A galvanic cell comprised of a cover (20, 20b, 20c) and a cupped container (10) having therein an anode (14) and a cathode (12) separated from the anode by a separator (16), with electrolyte disposed therein, characterized in that said cell possesses at least one rupture disphragm assembly comprised of a thin film membrane (24, 24b, 24c) which is secured over the pressure side of a venting aperture (22, 22b, 22c) which is defined in said cell cover (20, 20b, 20c) or container (10) such that when the internal pressure of the cell exceeds a predetermined limit said thin film membrane (24, 24b, 24c) will rupture allowing the pressure to be relieved from the interior of the cell via said venting aperture (22, 22b, 22c).

2. The cell of claim 1, characterized in that the thin film membrane (24, 24b, 24c) is secured over the venting aperture (22, 22b, 22c) by the use of an adhesive.

3. The cell of claim 2, characterized in that the adhesive is a polyamide hot melt.

4. The cell of claim 1, characterized in that the thin film membrane (24, 24b, 24c) is permeable to hydrogen.

5. The cell of claim 1, characterized in that the thin film membrane (24, 24b, 24c) is selected from the group consisting of nylon, polyethylene, vinyl, metallized plastics and metals.

6. A galvanic cell comprised of a cover (20, 20b, 20c), a closure gasket (32b) and a cupped container (10) having therein an anode (14) and a cathode (12) separated from the anode by a separator (16), with electrolyte disposed therein, characterized in that said cell possesses at least one rupture diaphragm assembly comprised of a thin film membrane (24, 24b, 24c) which is secured over the pressure side of a venting aperture (22, 22b, 22c) which is defined in said closure gasket (32b) such that when the internal pressure of the cell exceeds a predetermined limit said thin film membrane (24, 24b, 24c) will rupture allowing the pressure to be relieved from the interior of the cell via said venting aperture (22, 22b, 22c).

7. The cell of claim 6, characterized in that the thin film membrane (24, 24b, 24c) is secured over the venting aperture (22, 22b, 22c) by the use of an adhesive.

8. The cell of claim 6, characterized in that the adhesive is a polyamide hot melt.

9. The cell of claim 6, characterized in that the thin film membrane (24, 24b, 24c) is permeable to hydrogen.

10. The cell of claim 6, characterized in that the thin film membrane (24, 24b, 24c) is selected from the group consisting of nylon, polyethylene, vinyl, metallized plastics and metals.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | US-A-2 693 499 (G.NEUMANN) *Claims 4,5,6; column 3, lines 31-38; figure 2; column 2, lines 18-20* | 1,4,5 | H 01 M 2/12 |
| | --- | | |
| X | DE-B-1 247 431 (Dr. H.VOGT) *Column 1, lines 18-23* | 1 | |
| | --- | | |
| X | US-A-1 920 799 (J.E.LILIENFELD) *Claims 4-5; page 1, line 103 - page 2, line 13; page 2, lines 37-50* | 1 | |
| | --- | | |
| X | US-A-3 197 547 (J.G.PEACE) *Figures 1,2; column 1, line 61 - column 2, line 20* | 1 | |
| | --- | | **TECHNICAL FIELDS SEARCHED (Int. Cl. ³)** |
| X | FR-A- 887 396 (FIDES) *Page 1, lines 45-60; claims 1,2; figure 1* | 1,2,5 | H 01 M 2/12 H 01 G 9/12 |
| | --- | | |
| P,Y | US-A-3 218 197 (R.CARMICHAEL) *Claims 1,2,5; column 4, lines 62-75* | 1,4,5, 6,9,10 | |
| | --- | | |
| Y | US-A-2 198 988 (G.BINIEK) *Figure 1; page 1, right-hand column, lines 13-34* | 1,2,6, 7 | |
| | --- -/- | | |

The present search report has been drawn up for all claims

| Place of search THE HAGUE | Date of completion of the search 04-04-1984 | Examiner D'HONDT J.W. |
|---|---|---|

European Patent Office

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | FR-A- 780 991 (SOLAR MANUFACTURING CORP.) *Figures 11,13; page 5, lines 59-93* | 1,5 | |
| | --- | | |
| X | DE-B-1 046 131 (ACCUMULATOREN-FABRIK AG.) *Figure 2; claims 1,3* | 1 | |
| | --- | | |
| A | US-A-3 221 217 (D.R.HUCKE) *Figure 1; column 3, lines 18-55* | 1 | |
| | --- | | |
| A | US-A-3 524 112 (A.RUTTKAY) *Claims; figure 1* | 1 | |
| | ----- | | TECHNICAL FIELDS SEARCHED (Int. Cl. ³) |

The present search report has been drawn up for all claims

| Place of search | Date of completion of the search | Examiner |
|---|---|---|
| THE HAGUE | 04-04-1984 | D'HONDT J.W. |